# FASCICULE DE BREVET EUROPEEN

(11) **EP 4 445 729 B1**
(45) Date de publication et mention de la délivrance du brevet: **22.10.2025**
(21) Numéro de dépôt: 24161192.0
(22) Date de dépôt: 04.03.2024
(51) Int. Cl.: A01M 7/00

(54) **PANNEAU RECUPERATEUR POUR SYSTEME DE PULVERISATION AGRICOLE**
AUFFANGPANEL FÜR LANDWIRTSCHAFTLICHES SPRÜHSYSTEM
RECOVERY PANEL FOR AGRICULTURAL SPRAYING SYSTEM

(30) Priorité: 03.04.2023 FR 2303270
(43) Date de publication de la demande: 16.10.2024
(73) Titulaire: Exel Industries, 51200 Epernay (FR)
(72) Inventeur: CHARCOSSET, Philippe, 69860 DEUX-GROSNES (FR)
(74) Mandataire: Bandpay & Greuter

(56) Documents cités:
- EP-A1- 4 122 319
- IT-A1- PD20 120 219
- US-A1- 2021 368 769

## Description

### DOMAINE TECHNIQUE

La présente invention concerne un panneau récupérateur pour système de pulvérisation agricole, notamment viticole ou arboricole, un système de pulvérisation agricole comprenant au moins un tel panneau récupérateur, ainsi qu'un engin agricole comprenant un tel système de pulvérisation agricole.

### ETAT DE LA TECHNIQUE

Il est connu des systèmes de pulvérisation agricole pour engin agricole, notamment viticole ou arboricole, comprenant une rampe de pulvérisation et des panneaux récupérateurs agencés face à face, deux par deux.

La rampe de pulvérisation est orientée globalement transversalement à la direction d'avancement de l'engin agricole et les panneaux récupérateur y sont suspendus.

Ces panneaux récupérateurs comprennent une pluralité d'ensembles de pulvérisation par l'intermédiaire desquels du liquide de traitement, tel que du produit phytosanitaire ou de l'engrais liquide, est pulvérisé sur des végétaux à traiter agencés entre deux panneaux récupérateur se faisant face. Pour cela, des diffuseurs d'air sont prévus pour produire un flux d'air qui porte ou souffle le liquide de traitement depuis la rampe de pulvérisation vers les végétaux à traiter.

En particulier, chaque panneau récupérateur comprend au moins un conduit d'air comportant un orifice d'entrée par l'intermédiaire duquel le conduit d'air est alimenté en air, notamment en air sous pression. L'orifice d'entrée d'air forme le sommet du panneau récupérateur et coopère avec une ventilation configurée pour faire circuler par l'orifice d'entrée, dans le conduit d'air, un flux d'air. Cette ventilation est notamment fixée, directement ou indirectement, au conduit d'air.

Toutefois, les panneaux récupérateur connus, étant fixes par rapport à la ventilation, peuvent entrer en collision avec un obstacle ou encore le sol dans le cas où il serait irrégulier ou encore s'il présentait un dévers par exemple. De telles collisions endommagent les panneaux récupérateurs et limitent ainsi leur fonctionnement et leur longévité.

Il est aussi connu que les panneaux récupérateur comportent en outre au moins un manchon, notamment en caoutchouc, permettant d'apporter l'air de la ventilation dans les panneaux de récupération. La souplesse du manchon ne permet pour autant pas d'articuler le panneaux récupérateur. En effet, lesdits manchons ne peuvent être dimensionnés pour résister au poids important de chacun des panneaux récupérateur.

La présente invention vise donc à résoudre les problèmes susmentionnés en proposant un panneau récupérateur, un système de pulvérisation comprenant au moins un tel panneau, ainsi qu'un engin agricole comprenant au moins un tel système, en particulier un panneau récupérateur mobile entre une position verticale et une pluralité de positions inclinées, lesdits panneaux étant configurés pour s'incliner dans l'une des positions inclinées au contact d'un obstacle. Ainsi, les collisions et chocs sont évitées et les endommagements en résultant le sont également.

### PRESENTATION DE L'INVENTION

Pour parvenir à ce résultat, la présente invention concerne un panneau récupérateur pour système de pulvérisation agricole. En particulier, ledit panneau est configuré pour être relié à un dispositif de ventilation et pour être relié à une rampe de pulvérisation, ledit panneau récupérateur s'étendant principalement suivant une direction verticale par rapport au sol, entre une base et un sommet. Ledit panneau récupérateur comporte un support de fixation configuré pour relier le dispositif de ventilation, la rampe de pulvérisation et le panneau récupérateur, ledit support de fixation comportant au moins une embase, un connecteur, un support et au moins une paire d'actionneurs, l'embase étant fixée sur le sommet dudit panneau récupérateur, le connecteur et le support étant configurés pour être reliés au dispositif de ventilation, à la rampe de pulvérisation et à l'embase, lesdits actionneurs étant mobiles entre une position rétractée et une position déployée le long d'un axe longitudinal, ledit support étant relié à l'embase au moyen desdits actionneurs, lesdits actionneurs comportant chacun une première extrémité et une seconde extrémité, lesdits actionneurs étant disposés de chaque côté d'un premier plan de symétrie s'étendant selon la direction verticale dudit panneau, ladite première extrémité de chaque actionneur étant reliée à l'embase et ladite seconde extrémité de chaque actionneur étant reliée au support, le connecteur étant configuré pour être relié au moyen d'une liaison pivot à ladite embase ou à ladite rampe de pulvérisation, l'actionneur étant configuré pour, lorsqu'une force est appliquée sur ledit panneau, se déplacer entre une position de repos et la position déployée et/ou rétractée de sorte à autoriser l'inclinaison dudit panneau par rapport à ladite direction verticale, et pour, lorsque ladite force n'est plus appliquée sur ledit panneau, revenir à la position de repos de sorte à ce que ledit panneau s'étende principalement suivant ladite direction verticale.

Le support de fixation peut ainsi adopter au moins trois déplacements, à savoir un premier déplacement, un deuxième déplacement et un troisième déplacement. Dans le premier déplacement, le panneau peut se déplacer selon une direction avant-arrière, dans le deuxième déplacement, le panneau peut se déplacer selon une direction gauche- droite et dans le troisième déplacement, le panneau peut se déplacer selon la direction avant-arrière et gauche-droite, également en diagonal. L'articulation du troisième déplacement correspond à celui d'une rotule. De tels mouvements du support de fixation permettent au panneau de s'incliner dans une pluralité de positions inclinées lorsqu'une force est appliquée sur le panneau, ladite force étant générée par un obstacle sur la trajectoire du panneau. Les collisions entre le panneau et l'obstacle sont donc évitées, tout comme les endommagements en résultant.

Avantageusement, le connecteur comporte une première liaison pivot et une seconde liaison pivot, ledit connecteur étant relié à ladite embase au moyen de ladite première liaison pivot et étant configuré pour être relié à ladite rampe de pulvérisation au moyen de ladite seconde liaison pivot, l'axe de rotation de la première liaison pivot et l'axe de rotation de la seconde liaison pivot étant sécants.

Avantageusement, l'actionneur est relié à l'embase par l'intermédiaire d'une pièce support, ladite pièce support étant reliée d'une part à l'embase par une liaison de type pivot et d'autre part à la première extrémité de l'actionneur par une autre liaison de type pivot, de sorte que ladite pièce support permette d'augmenter la course de l'actionneur entre sa position de repos et sa position déployée.

La pièce support permet d'augmenter la course de l'actionneur entre sa position de repos et sa position déployée et donc d'augmenter la course du panneau avant qu'il ne soit en butée. L'augmentation de la course permet d'éviter une trop forte rigidité et résistance du support de fixation, et donc du panneau. La pièce support permet d'éviter au support de fixation de casser.

Avantageusement, ledit support de fixation comporte deux paires d'actionneurs, lesdites paires étant disposées de chaque côté d'un second plan de symétrie selon la direction verticale dudit panneau, ladite première extrémité de chaque actionneur étant reliée à l'embase et ladite seconde extrémité de chaque actionneur étant reliée au support.

La répartition des actionneurs par paire de part et d'autre du plan de symétrie du panneau permet une meilleure répartition des efforts lors de l'inclinaison du panneau.

Avantageusement encore, l'axe longitudinal de chaque actionneur est incliné par rapport à l'un quelconque des plans de symétrie selon la direction verticale dudit panneau, lesdits axes longitudinaux étant sensiblement concourants en un point appartenant à l'un desdits plans de symétrie selon la direction verticale.

La répartition des actionneurs en deux paires d'actionneurs permet une encore meilleure répartition des efforts lors de l'inclinaison du panneau. Dans le premier déplacement du support de fixation, deux actionneurs passent en position déployée et deux actionneurs passent en position rétractée. En particulier, une première paire d'actionneurs disposés chacun de part et d'autre d'un premier plan de symétrie du panneau passent en position déployée et une deuxième paire d'actionneurs disposés chacun de part et d'autre du premier plan de symétrie du panneau mais en regard de la première paire selon un deuxième plan de symétrie du panneau, passent en position rétractée. Un tel déplacement des actionneurs permet l'inclinaison du panneau, vers l'arrière ou vers l'avant. Dans le deuxième déplacement du support de fixation, deux actionneurs passent en position déployée et deux actionneurs passent en position rétractée. En particulier une première paire d'actionneurs disposé chacun de part et d'autre du deuxième plan de symétrie du panneau passent en position déployée et une deuxième paire d'actionneurs disposé chacun de part et d'autre du deuxième plan de symétrie du panneau mais en regard de la première paire selon le premier plan de symétrie du panneau, passent en position rétractée. Un tel déplacement des actionneurs permet l'inclinaison du panneau, vers la droite ou vers la gauche. Dans le troisième déplacement du support de fixation, un mouvement avant-arrière en même temps qu'un mouvement gauche-droite est alors autorisé. En particulier, les actionneurs n'ont plus un fonctionnement identique par paires, mais ils ont un fonctionnement individuel, de sorte que chacun adopte une position propre, entre sa position rétractée et déployée. Ainsi, les actionneurs couplés aux deux liaisons pivots forment une liaison rotule, permettant un mouvement du panneau selon, simultanément, la direction avant-arrière et la direction gauche-droite. Le panneau peut alors adopter une position inclinée suivant plusieurs axes. Il est également possible un mouvement de déplacement du support de fixation couplant le mouvement avant-arrière et le mouvement gauche-droite, les actionneurs ayant un fonctionnement identique par paires. Il s'agirait alors de la combinaison du premier déplacement du support de fixation et du deuxième déplacement du support de fixation. Une telle configuration empêche la rotation du panneau.

Avantageusement encore, le connecteur étant configuré pour être relié au moyen d'une liaison pivot a ladite embase, caractérisé en ce que l'embase est configurée pour venir en butée contre le connecteur lors de l'inclinaison dudit panneau par rapport à ladite direction verticale, autour de l'axe de rotation de la liaison pivot reliant le connecteur à l'embase.

Les axes longitudinaux des actionneurs sont inclinés et concourants sensiblement en un point appartenant à l'un des plans de symétrie du panneau selon la direction verticale. Une telle orientation des actionneurs permet une meilleure répartition des efforts lors de l'inclinaison du panneau dans l'une quelconque des positions inclinées.

Avantageusement encore, le connecteur est configuré pour être relié au moyen d'une liaison pivot à ladite rampe de pulvérisation, caractérisé en ce que le connecteur est configuré pour venir en butée contre le support lors de l'inclinaison dudit panneau par rapport à ladite direction verticale, autour de l'axe de rotation de la liaison pivot configurée pour relier le connecteur à la rampe de pulvérisation.

Cette butée permet d'arrêter la course des actionneurs, et ainsi de définir l'inclinaison maximale que peut adopter le panneau dans son mouvement avant-arrière. Si les actionneurs sont des compas à gaz, cette butée permet d'éviter d'atteindre la butée mécanique desdits compas à gaz.

Avantageusement encore, le panneau comporte un capteur de fin de course associé à chaque actionneur, configuré pour détecter lorsqu'un actionneur atteint la position déployée.

Cette butée permet d'arrêter la course des actionneurs, et ainsi de définir l'inclinaison maximale que peut adopter le panneau dans son mouvement gauche-droite.

L'invention concerne également un système de pulvérisation agricole pour engin agricole, comprenant au moins un panneau récupérateur tel que précédemment décrit, un dispositif de ventilation et une rampe de pulvérisation, le support de fixation dudit panneau reliant le dispositif de ventilation, la rampe de pulvérisation et ledit panneau récupérateur, le connecteur étant relié au moyen d'une liaison pivot à l'embase et/ou à ladite rampe de pulvérisation.

L'invention concerne également un engin agricole comprenant un système de pulvérisation tel que décrit précédemment.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une vue en perspective depuis l'arrière-gauche d'un panneau récupérateur selon l'invention, ledit panneau récupérateur comportant un support de fixation et étant relié à un dispositif de ventilation et à une rampe de pulvérisation ;
La figure 2 est un agrandissement du support de fixation du panneau de la figure 1, le support de fixation comportant une embase, un connecteur, un support et des actionneurs, le support de fixation étant dans une position initiale ;
La figure 3 est une vue similaire à la figure 2, mais le support de fixation étant dans un premier déplacement ;
La figure 4 représente le support de fixation de la figure 2, ledit support étant dans un deuxième déplacement ;
La figure 5 est une vue similaire à la figure 2, mais le support de fixation étant dans un troisième déplacement ;

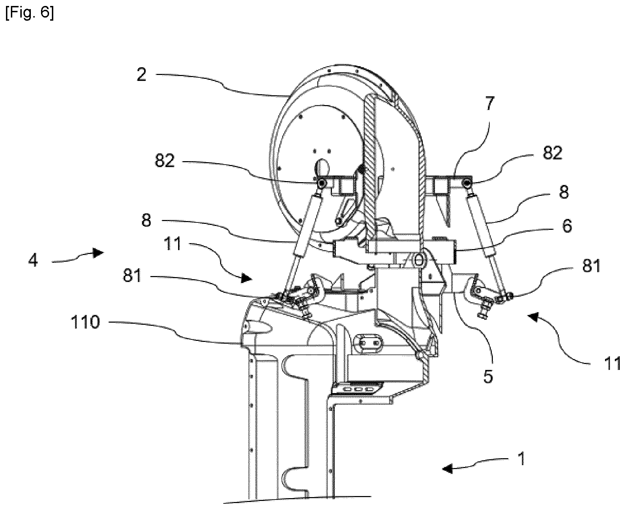

La figure 6 est une vue en coupe du dispositif de fixation de la figure 2, rendant particulièrement visible la liaison des actionneurs à l'embase et au support ;
La figure 7 est une vue en perspective, prise de gauche, du dispositif de fixation de la figure 3, rendant visible l'embase en butée contre le connecteur ; et
La figure 8 est une vue similaire à la figure 7, du dispositif de fixation de la figure 4, rendant visible le connecteur en butée contre le support.

Il faut noter que les figures exposent l'invention de manière détaillée pour permettre de mettre en oeuvre l'invention ; bien que non limitatives, lesdites figures servent notamment à mieux définir l'invention le cas échéant.

### DESCRIPTION DETAILLEE DE L'INVENTION

L'invention concerne un panneau récupérateur 1 pour système de pulvérisation agricole. Le système de pulvérisation 1 est configuré pour être relié à un dispositif de ventilation 2. Il est également configuré pour être relié, en particulier suspendu, à une rampe de pulvérisation 3.

Dans la suite de la description, il est adopté à titre non limitatif, un repère global comportant une direction longitudinale X orientée d'arrière en avant dans le sens d'avancement du panneau récupérateur 1, une direction transversale Y orientée de droite à gauche, et une direction verticale Z orientée de bas en haut. Les directions longitudinales X et transversale Y sont horizontales et sensiblement parallèles à un sol (non représenté).

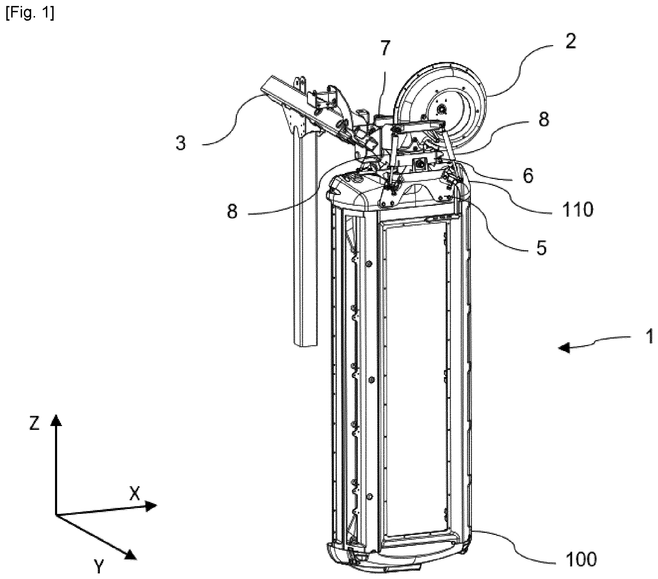

Le panneau récupérateur 1 s'étend principalement suivant la direction verticale Z, du bas vers le haut, entre une base 100 et un sommet 110 (figure 1).

Le panneau récupérateur 1 comporte un support de fixation 4 en son sommet 110. Ce support de fixation 4 est configuré pour relier le dispositif de ventilation 2, la rampe de pulvérisation 3 et le panneau récupérateur 1. En particulier, le support de fixation 4 relie, d'une part, le panneau 1 à la rampe de pulvérisation 3 et, d'autre part, relie le panneau 1 au dispositif de ventilation 2.

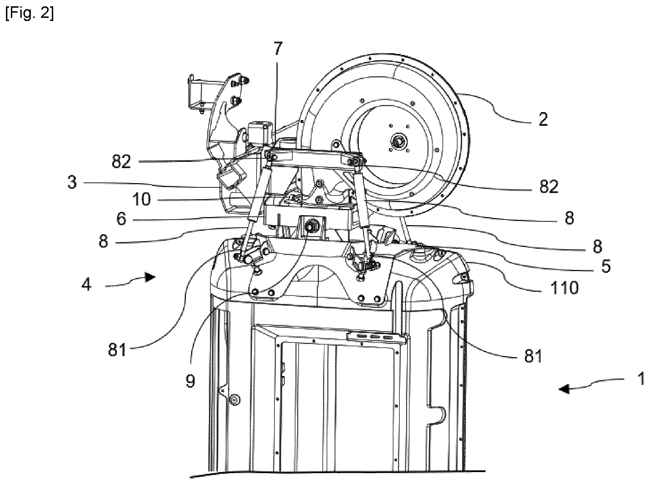

Tel que cela est représenté sur la figure 2, le support de fixation 4 comporte une embase 5, un connecteur 6, un support 7 et au moins un actionneur 8.

L'embase 5 est fixée sur le sommet 110 du panneau récupérateur 1. Le connecteur 6 est relié d'une part à l'embase 5 et d'autre part à la rampe de pulvérisation 3. Le support 7 est relié d'une part à la rampe de pulvérisation 3 et supporte le dispositif de ventilation 2.

En particulier, le connecteur 6 est relié à l'embase 5 au moyen d'une première liaison pivot 9 et/ou à la rampe de pulvérisation 3 au moyen d'une deuxième liaison pivot 10.

Dans un mode de réalisation particulier de l'invention (non représenté), le connecteur 6 est relié à l'embase 5 au moyen de la première liaison pivot 9. La première liaison pivot 9 permet alors un mouvement du panneau 1 selon la direction longitudinale X, c'est-à-dire un mouvement avant-arrière du panneau 1. Dans ce mode de réalisation, la liaison pivot 9 est la seule liaison pivot du support de fixation 4. Ainsi, le seul mouvement autorisé du panneau est un mouvement avant-arrière, selon la direction longitudinale X.

Dans un autre mode de réalisation particulier de l'invention (non représenté), le connecteur 6 est relié à la rampe de pulvérisation 3 au moyen de la deuxième liaison pivot 10. La deuxième liaison pivot 10 permet alors un mouvement du panneau 1 selon la direction transversale Y, c'est-à-dire un mouvement gauche-droite du panneau 1. Dans ce mode de réalisation, la liaison pivot 10 est la seule liaison pivot du support de fixation 4. Ainsi, le seul mouvement autorisé du panneau est un mouvement gauche-droite, selon la direction transversale Y.

Dans un autre mode de réalisation encore, représenté sur les figures, le connecteur 6 est relié à l'embase 5 au moyen de la première liaison pivot 9 et à la rampe de pulvérisation 3 au moyen de la deuxième liaison pivot 10. La première liaison pivot 9 permet le mouvement du panneau 1 selon la direction longitudinale X, c'est-à-dire le mouvement avant-arrière du panneau 1 et la deuxième liaison pivot 10 permet le mouvement du panneau 1 selon la direction transversale Y, c'est-à-dire le mouvement gauche-droite du panneau 1. Ainsi, deux mouvements sont autorisés, un mouvement avant-arrière, selon la direction longitudinale X et un mouvement gauche-droite, selon la direction transversale Y.

Dans ce mode de réalisation, l'axe de rotation de la première liaison pivot 9 et l'axe de rotation de la deuxième liaison pivot 10 sont sécants. Avantageusement, lesdits axes de rotation 9 et 10 sont orthogonaux.

De plus, l'embase 5 est reliée au support 7 au moyen de l'actionneur 8.

Avantageusement, le support de fixation 4 comporte au moins une paire d'actionneurs 8. Les actionneurs 8 sont disposés de chaque côté d'un premier plan de symétrie du panneau 1, formé par la direction verticale Z et la direction longitudinale X. La première extrémité 81 de chaque actionneur 8 est alors reliée à l'embase 5 et la seconde extrémité 82 de chaque actionneur 8 est reliée au support 7.

Dans le mode de réalisation représenté sur les figures, le support de fixation 4 comporte quatre actionneurs 8, disposés par paires, de part et d'autre du panneau de récupération 1, de chaque côté d'un second plan de symétrie du panneau 1, formé par la direction verticale Z et la direction longitudinale Y. La première extrémité 81 de chaque actionneur 8 est reliée à l'embase 5 et la seconde extrémité 82 de chaque actionneur 8 est reliée au support 7.

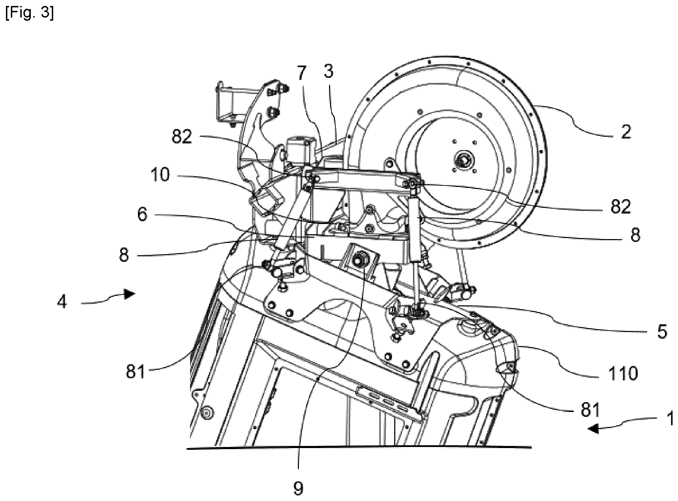

Les actionneurs 8 sont mobiles entre une position rétractée et une position déployée le long d'un axe longitudinal de l'actionneur (figure 3). Lesdits actionneurs 8 peuvent également adopter une position intermédiaire appelée position de repos, visible sur la figure 2, en d'autres termes, les actionneurs sont en entraxe ouvert en position de repos.

Chaque actionneur 8 comporte une première extrémité 81 et une seconde extrémité 82. La première extrémité 81 est reliée à l'embase 5 et la seconde extrémité 82 est reliée au support 7.

L'actionneur 8 est configuré pour, lorsqu'une force est appliquée sur ledit panneau 1, passer de la position de repos (figure 2) à la position déployée et/ou rétractée (figure 3) de sorte autoriser l'inclinaison du panneau par rapport à la direction verticale Z, autour de l'axe de rotation de la liaison pivot 9 et/ou de la liaison pivot 10, et pour, lorsque ladite force n'est plus appliquée sur ledit panneau 1, passer de la position déployée et/ou rétractée à la position de repos de sorte à ce que ledit panneau 1 s'étende principalement suivant la direction verticale Z. La première extrémité 81 de chaque actionneur 8 est reliée à l'embase 5 et ladite seconde extrémité 82 de chaque actionneur 8 est reliée au support 7.

En outre, l'axe longitudinal de chaque actionneur 8 est incliné par rapport au premier et/ou au deuxième plan de symétrie du panneau 1, lesdits axes longitudinaux étant concourants en un point appartenant à l'un desdits plans de symétrie.

Ainsi, tel que cela est représenté sur la figure 2, lorsque les actionneurs 8 sont en position de repos, le panneau de récupération 1 s'étend principalement selon la direction verticale Z. Dans cette position de repos des actionneurs 8 et cette position verticale du panneau 1, le support de fixation 4 est dans une position dite initiale.

La figure 3 représente un premier déplacement du support de fixation 4. Suite à ce premier déplacement, deux actionneurs 8 sont en position de repos et deux actionneurs 8 en position rétractée (seul un actionneur en position rétractée est rendu visible). En particulier une première paire d'actionneurs 8 disposé chacun de part et d'autre du premier plan de symétrie du panneau 1 sont en position déployée et une deuxième paire d'actionneurs 8 disposé chacun de part et d'autre du premier plan de symétrie du panneau 1 mais en regard de la première paire selon le deuxième plan de symétrie du panneau 1 sont en position rétractée. Une telle position des actionneurs 8 permet l'inclinaison du panneau 1, vers l'arrière ou vers l'avant.

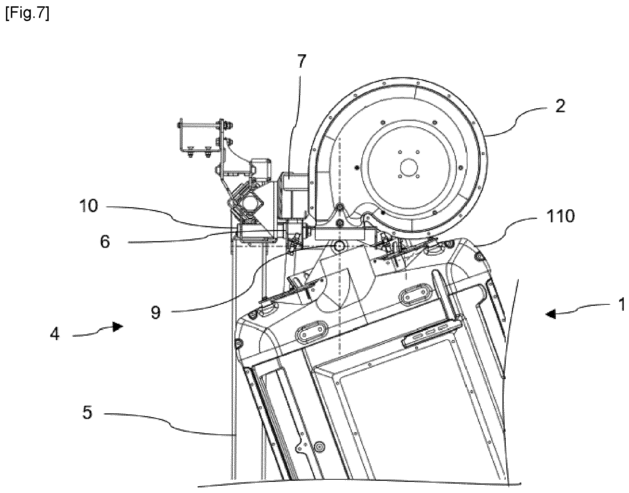

En outre et tel que cela est représenté sur la figure 7, l'embase 5 est configurée pour venir en butée contre le connecteur 6 lors de l'inclinaison du panneau 1 par rapport à la direction verticale Z, autour de l'axe de rotation de la liaison pivot 9 reliant le connecteur 6 à l'embase 5.

Cette butée permet d'arrêter la course des actionneurs 8, ici de la première paire d'actionneurs 8 et ainsi de définir l'inclinaison maximale que peut adopter le panneau 1.

Aussi, la première paire d'actionneurs 8 peut être en position rétractée et la deuxième en position déployée, les actionneurs 8 permettraient alors l'inclinaison du panneau 1, vers l'avant.

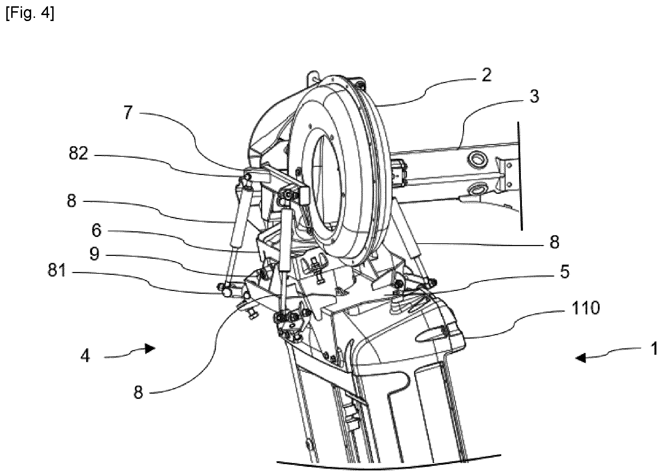

La figure 4 représente un deuxième déplacement du support de fixation 4. Suite à ce deuxième déplacement, deux actionneurs 8 sont en position déployée et deux actionneurs 8 en position rétractée (seul un actionneur en position rétractée est rendu visible). En particulier une première paire d'actionneurs 8 disposé chacun de part et d'autre du deuxième plan de symétrie du panneau 1 sont en position déployée et une deuxième paire d'actionneurs 8 disposé chacun de part et d'autre du deuxième plan de symétrie du panneau 1 mais en regard de la première paire selon le premier plan de symétrie du panneau 1 sont en position rétractée. Une telle position des actionneurs 8 permet l'inclinaison du panneau 1, vers la droite.

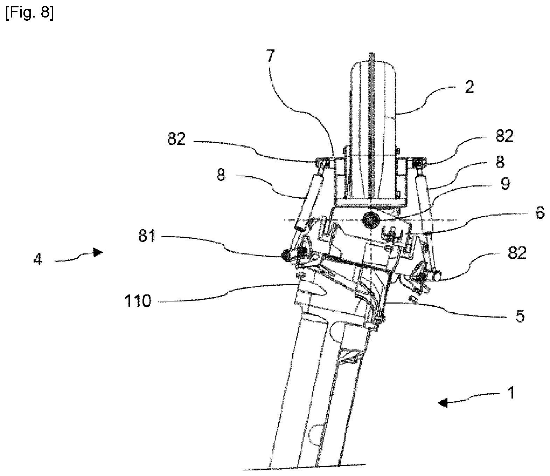

En outre et tel que cela est représenté sur la figure 8, le connecteur 6 est configuré pour venir en butée contre le support 7 lors de l'inclinaison du panneau 1 par rapport à la direction verticale Z, autour de l'axe de rotation de la liaison pivot 10 reliant le connecteur 6 à la rampe de pulvérisation 3.

Cette butée permet d'arrêter la course des actionneurs 8, ici de la première paire d'actionneurs 8 et ainsi de définir l'inclinaison maximale que peut adopter le panneau 1.

Aussi, la première paire d'actionneurs 8 peut être en position rétractée et la deuxième en position déployée, les actionneurs 8 permettraient alors l'inclinaison du panneau 1, vers la gauche.

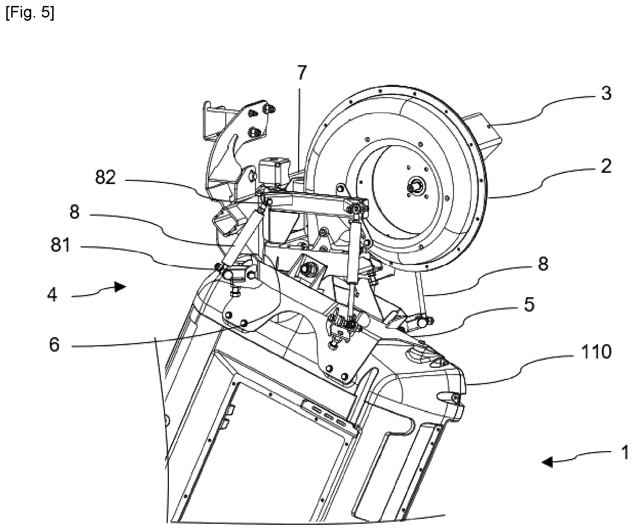

La figure 5 représente un troisième déplacement du support de fixation 4. Du fait de ce troisième déplacement, le connecteur 6 a pivoté par rapport à l'embase 5 autour de la première liaison pivot 9 et le connecteur a pivoté par rapport à la rampe de pulvérisation 3 autour de la deuxième liaison pivot 10. Un mouvement avant-arrière en même temps qu'un mouvement gauche-droite est alors autorisé. En particulier, les actionneurs 8 ne fonctionnent plus par paires, mais individuellement, de sorte à chacun adopter une position propre, entre leur position rétractée et déployée. Ainsi, les actionneurs couplés aux deux liaisons pivots forment une liaison rotule, permettant un mouvement du panneau 1 selon, simultanément, la direction avant-arrière et la direction gauche-droite. Le panneau 1 peut alors adopter une pluralité de positions inclinées.

En outre, le support de fixation 4 comporte une pièce support 11. La pièce support 11 relie d'une part l'actionneur 8 à l'embase 5. En particulier, la pièce support 11 est reliée à l'embase 5 par une liaison de type pivot et à la première extrémité 81 de l'actionneur 8 par une autre liaison de type pivot. Ainsi, la pièce support 11 permet d'augmenter la course de l'actionneur 8 entre sa position de repos et sa position déployée.

L'augmentation de la course permet d'éviter une trop forte rigidité et résistance du support de fixation 4, et donc du panneau 1. La pièce support 11 permet d'éviter au support de fixation de casser.

Selon un mode de réalisation particulier de l'invention, la pièce support 11 comporte une biellette. L'utilisation de biellette permet en effet l'augmentation de la course de l'actionneur 8, comme décrit ci-dessus, avant que le panneau 1 ne soit en butée mécanique. Lesdites biellettes assurent ainsi la sauvegarde des actionneurs, notamment des compas à gaz qui sont en entraxe ouvert dans la position de repos.

Avantageusement, l'actionneur 8 est un vérin à gaz ou un compas à gaz. Lorsque l'actionneur est un compas à gaz, la pièce support 11 est d'autant plus indiquée, afin d'éviter toute casse du compas à gaz, qui est ouvert en position de repos.

Selon une variante non représentée, l'actionneur peut être un vérin hydraulique.

Avantageusement encore, l'actionneur 8 est configuré pour, lorsque que la force appliquée sur le panneau ayant entrainé son inclinaison ne l'est plus, revenir dans sa position de repos, permettant au panneau de s'étendre principalement selon la direction verticale Z. A cet effet, l'actionneur comporte une force de rappel permettant le retour de l'actionneur en position de repos depuis sa position rétractée et/ou depuis sa position déployée.

Avantageusement encore, l'actionneur 8 est configuré pour amortir les oscillations du panneau 1 lors de son déplacement de la position verticale à la position inclinée ou lors du déplacement de la position inclinée à la position verticale.

L'invention concerne également un système de pulvérisation agricole pour engin agricole. Le système comporte au moins un panneau récupérateur 1, avantageusement deux panneaux 1 en regard l'un de l'autre. Le système comporte en outre un dispositif de ventilation 2 et une rampe de pulvérisation 3, le support de fixation 4 du panneau 1 relie le dispositif de ventilation 2, la rampe de pulvérisation 3 et le panneau récupérateur 1, le connecteur 6 étant relié au moyen d'une liaison pivot à l'embase 5 et/ou à la rampe de pulvérisation 3.

Le support de fixation 4 du panneau récupérateur 1 permet au panneau de s'incliner dans une pluralité de positions inclinées au contact d'un obstacle générant une force sur ledit panneau 1. Ainsi, les collisions du panneau 1 contre l'obstacle sont évités et les endommagements en résultant le sont également.

L'invention concerne encore un engin agricole comprenant au moins un système de pulvérisation tel que décrit précédemment.

Selon une variante non représentée, le panneau récupérateur 1 de l'invention comprend un ou une pluralité de capteurs de fin de course associé à chaque actionneur et configuré pour détecter lorsque l'actionneur correspondant atteint la position déployée.

En particulier, ces capteurs de fin de course permettent à l'utilisateur d'être averti lorsque le panneau récupérateur 1 est entré en collision avec un obstacle.

L'invention n'est pas limitée aux modes de réalisation précédemment décrits mais s'étend à tout mode de réalisation conforme à son esprit.

## Revendications

1. Panneau récupérateur (1) pour système de pulvérisation agricole, configuré pour être relié à un dispositif de ventilation (2) et pour être relié à une rampe de pulvérisation (3), ledit panneau récupérateur (1) s'étendant principalement suivant une direction verticale (Z) par rapport au sol, entre une base (100) et un sommet (100),
ledit panneau récupérateur (1) comportant un support de fixation (4) configuré pour relier le dispositif de ventilation (2), la rampe de pulvérisation (3) et le panneau récupérateur (1),
ledit support de fixation (4) comportant au moins une embase (5), un connecteur (6), un support (7) et au moins une paire d'actionneurs (8),
l'embase (5) étant fixée sur le sommet (110) dudit panneau récupérateur (1), le connecteur (6) et le support (7) étant configurés pour être reliés au dispositif de ventilation (2), à la rampe de pulvérisation (3) et à l'embase (5), lesdits actionneurs (8) étant mobiles entre une position rétractée et une position déployée le long d'un axe longitudinal,
ledit support (7) étant relié à l'embase (5) au moyen desdits actionneurs (8),
lesdits actionneurs (8) comportant chacun une première extrémité (81) et une seconde extrémité (82), **caractérisé en ce que** lesdits actionneurs (8) sont disposés de chaque côté d'un premier plan de symétrie s'étendant selon la direction verticale (Z) dudit panneau (1), ladite première extrémité (81) de chaque actionneur (8) étant reliée à l'embase (5) et ladite seconde extrémité (82) de chaque actionneur (8) étant reliée au support (7),
le connecteur (6) étant configuré pour être relié au moyen d'une liaison pivot (9 ;10) à ladite embase (5) ou à ladite rampe de pulvérisation (3),
l'actionneur (8) étant configuré pour, lorsqu'une force est appliquée sur ledit panneau (1), se déplacer entre une position de repos et la position déployée et/ou rétractée de sorte à autoriser l'inclinaison dudit panneau (1) par rapport à ladite direction verticale (Z), et pour, lorsque ladite force n'est plus appliquée sur ledit panneau (1), revenir à la position de repos de sorte à ce que ledit panneau (1) s'étende principalement suivant ladite direction verticale (Z).

2. Panneau récupérateur (1) selon la revendication précédente, **caractérisé en ce que** le connecteur (6) comporte une première liaison pivot (9) et une seconde liaison pivot (10), ledit connecteur (6) étant relié à ladite embase (5) au moyen de ladite première liaison pivot (9) et étant configuré pour être relié à ladite rampe de pulvérisation (3) au moyen de ladite seconde liaison pivot (10), l'axe de rotation de la première liaison pivot (9) et l'axe de rotation de la seconde liaison pivot (10) étant sécants.

3. Panneau récupérateur (1) selon l'une quelconque des revendications précédentes, **caractérisé en ce que** l'actionneur (8) est relié à l'embase (5) par l'intermédiaire d'une pièce support (11), ladite pièce support (11) étant reliée d'une part à l'embase (5) par une liaison de type pivot et d'autre part à la première extrémité (81) de l'actionneur (8) par une autre liaison de type pivot, de sorte que ladite pièce support (11) permette d'augmenter la course de l'actionneur (8) entre sa position de repos et sa position déployée.

4. Panneau récupérateur (1) selon la revendication précédente, **caractérisé en ce que** ledit support de fixation (4) comporte deux paires d'actionneurs (8), lesdites paires étant disposées de chaque côté d'un second plan de symétrie selon la direction verticale (Z) dudit panneau (1), ladite première extrémité (81) de chaque actionneur (8) étant reliée à l'embase (5) et ladite seconde extrémité (82) de chaque actionneur (8) étant reliée au support (7).

5. Panneau récupérateur (1) selon la revendication précédente, **caractérisé en ce que** l'axe longitudinal de chaque actionneur (8) est incliné par rapport à l'un quelconque des plans de symétrie selon la direction verticale (Z) dudit panneau (1), lesdits axes longitudinaux étant sensiblement concourants en un point appartenant à l'un desdits plans de symétrie selon la direction verticale (Z).

6. Panneau récupérateur (1) selon la revendication 1, le connecteur (6) étant configuré pour être relié au moyen d'une liaison pivot (9) à ladite embase (5), **caractérisé en ce que** l'embase (5) est configurée pour venir en butée contre le connecteur (6) lors de l'inclinaison dudit panneau (1) par rapport à ladite direction verticale (Z), autour de l'axe de rotation de la liaison pivot (9) reliant le connecteur (6) à l'embase (5).

7. Panneau récupérateur (1) selon la revendication 1, le connecteur (6) étant configuré pour être relié au moyen d'une liaison pivot (10) à ladite rampe de pulvérisation (3), **caractérisé en ce que** le connecteur (6) est configuré pour venir en butée contre le support (7) lors de l'inclinaison dudit panneau (1) par rapport à ladite direction verticale (Z), autour de l'axe de rotation de la liaison pivot (10) configurée pour relier le connecteur (6) à la rampe de pulvérisation (3).

8. Panneau récupérateur (1) selon l'une des revendication précédentes, comprenant un capteur de fin de course associé à chaque actionneur (8), configuré pour détecter lorsqu'un actionneur (8) atteint la position déployée.

9. Système de pulvérisation agricole pour engin agricole, comprenant au moins un panneau récupérateur (1) selon l'une quelconque des revendications précédentes, un dispositif de ventilation (2) et une rampe de pulvérisation (3), le support de fixation (4) dudit panneau (1) reliant le dispositif de ventilation (2), la rampe de pulvérisation (3) et ledit panneau récupérateur (1), le connecteur (6) étant relié au moyen d'une liaison pivot (9 ;10) à l'embase (5) et/ou à ladite rampe de pulvérisation (3).

10. Engin agricole comprenant un système de pulvérisation agricole selon la revendication précédente.

## Patentansprüche

1. Auffangplatte (1) für ein landwirtschaftliches Sprühsystem, die zum Verbundenwerden mit einer Belüftungsvorrichtung (2) und zum Verbundenwerden mit einem Spritzgestänge (3) konfiguriert ist, wobei sich die Auffangplatte (1) hauptsächlich in einer vertikalen Richtung (Z) relativ zu dem Boden zwischen einem Sockel (100) und einem oberen Teil (100) erstreckt, wobei die Auffangplatte (1) eine Befestigungshalterung (4) aufweist, die zum Verbinden der Belüftungsvorrichtung (2), des Spritzgestänges (3) und der Auffangplatte (1) konfiguriert ist, wobei die Befestigungshalterung (4) mindestens eine Basis (5), einen Anschluss (6), eine Halterung (7) und mindestens ein Paar Aktuatoren (8) aufweist, wobei die Basis (5) auf dem oberen Teil (110) der Auffangplatte (1) befestigt ist, wobei der Anschluss (6) und die Halterung (7) zum Verbundenwerden mit der Belüftungsvorrichtung (2), mit dem Spritzgestänge (3) und mit der Basis (5) konfiguriert sind, wobei die Aktuatoren (8) zwischen einer eingefahrenen Position und einer ausgefahrenen Position entlang einer Längsachse bewegbar sind, wobei die Halterung (7) mit der Basis (5) mittels der Aktuatoren (8) verbunden ist, wobei die Aktuatoren (8) jeweils ein erstes Ende (81) und ein zweites Ende (82) aufweisen, **dadurch gekennzeichnet, dass** die Aktuatoren (8) auf beiden Seiten einer ersten Symmetrieebene angeordnet sind, die sich in der vertikalen Richtung (Z) der Platte (1) erstreckt, wobei das erste Ende (81) jedes Aktuators (8) mit der Basis (5) verbunden ist und das zweite Ende (82) jedes Aktuators (8) mit der Halterung (7) verbunden ist, wobei der Anschluss (6) zum Verbundenwerden mit der Basis (5) oder mit dem Spritzgestänge (3) mittels einer Schwenkverbindung (9; 10) konfiguriert ist, wobei der Aktuator (8), wenn eine Kraft auf die Platte (1) ausgeübt wird, zum Verschieben zwischen einer Ruheposition und der ausgefahrenen und/oder eingefahrenen Position, um die Neigung der Platte (1) relativ zu der vertikalen Richtung (Z) zu ermöglichen, und, wenn die Kraft nicht mehr auf die Platte (1) ausgeübt wird, zum Zurückkehren in die Ruheposition konfiguriert ist, sodass sich die Platte (1) hauptsächlich in der vertikalen Richtung (Z) erstreckt.

2. Auffangplatte (1) nach dem vorstehenden Anspruch, **dadurch gekennzeichnet, dass** der Anschluss (6) eine erste Schwenkverbindung (9) und eine zweite Schwenkverbindung (10) aufweist, wobei der Anschluss (6) mit der Basis (5) mittels der ersten Schwenkverbindung (9) verbunden ist und zum Verbundenwerden mit dem Spritzgestänge (3) mittels der zweiten Schwenkverbindung (10) konfiguriert ist, wobei sich die Drehachse der ersten Schwenkverbindung (9) und die Drehachse der zweiten Schwenkverbindung (10) schneiden.

3. Auffangplatte (1) nach einem der vorstehenden Ansprüche, **dadurch gekennzeichnet, dass** der Aktuator (8) über ein Halterungsstück (11) mit der Basis (5) verbunden ist, wobei das Halterungsstück (11) einerseits über eine Schwenkverbindung mit der Basis (5) und andererseits über eine weitere Schwenkverbindung mit dem ersten Ende (81) des Aktuators (8) verbunden ist, sodass das Halterungsstück (11) es ermöglicht, den Hub des Aktuators (8) zwischen seiner Ruheposition und seiner Einsatzposition zu vergrößern.

4. Auffangplatte (1) nach dem vorstehenden Anspruch, **dadurch gekennzeichnet, dass** die Befestigungshalterung (4) zwei Paare von Aktuatoren (8) aufweist, wobei die Paare auf jeder Seite einer zweiten Symmetrieebene in der vertikalen Richtung (Z) der Platte (1) angeordnet sind, wobei das erste Ende (81) jedes Aktuators (8) mit der Basis (5) verbunden ist und das zweite Ende (82) jedes Aktuators (8) mit der Halterung (7) verbunden ist.

5. Auffangplatte (1) nach dem vorstehenden Anspruch, **dadurch gekennzeichnet, dass** die Längsachse jedes Aktuators (8) relativ zu einer der Symmetrieebenen in der vertikalen Richtung (Z) der Platte (1) geneigt ist, wobei die Längsachsen im Wesentlichen in einem Punkt zusammenlaufen, der zu einer der Symmetrieebenen in der vertikalen Richtung (Z) gehört.

6. Auffangplatte (1) nach Anspruch 1, wobei der Anschluss (6) zum Verbundenwerden mit der Basis (5) mittels einer Schwenkverbindung (9) konfiguriert ist, **dadurch gekennzeichnet, dass** die Basis (5) zum Anliegen an dem Anschluss (6) während der Neigung der Platte (1) relativ zu der vertikalen Richtung (Z) um die Drehachse der Schwenkverbindung (9) herum konfiguriert ist, die den Anschluss (6) mit der Basis (5) verbindet.

7. Auffangplatte (1) nach Anspruch 1, wobei der Anschluss (6) zum Verbundenwerden mit dem Spritzgestänge (3) mittels einer Schwenkverbindung (10) konfiguriert ist, **dadurch gekennzeichnet, dass** der Anschluss (6) zum Anliegen an der Halterung (7) während der Neigung der Platte (1) relativ zu der vertikalen Richtung (Z) um die Drehachse der Schwenkverbindung (10) herum konfiguriert ist, die zum Verbinden des Anschlusses (6) mit dem Spritzgestänge (3) konfiguriert ist.

8. Auffangplatte (1) nach einem der vorstehenden Ansprüche, umfassend einen Endlagensensor, der jedem Aktuator (8) zugeordnet ist, der zum Erkennen konfiguriert ist, wenn ein Aktuator (8) die ausgefahrene Position erreicht.

9. Landwirtschaftliches Sprühsystem für landwirtschaftliche Maschinen, umfassend mindestens eine Auffangplatte (1) nach einem der vorstehenden Ansprüche, eine Belüftungsvorrichtung (2) und ein Spritzgestänge (3), wobei die Befestigungshalterung (4) der Platte (1) die Belüftungsvorrichtung (2), das Spritzgestänge (3) und die Auffangplatte (1) verbindet, wobei der Anschluss (6) mit der Basis (5) und/oder dem Spritzgestänge (3) mittels einer Schwenkverbindung (9; 10) verbunden ist.

10. Landwirtschaftliche Maschine, umfassend ein landwirtschaftliches Sprühsystem nach dem vorstehenden Anspruch.

## Claims

1. Recovery panel (1) for an agricultural spraying system, which is configured to be connected to a ventilation device (2) and to be connected to a spray boom (3), said recovery panel (1) extending mainly in a vertical direction (Z) with respect to the ground, between a base (100) and a top (100), said recovery panel (1) comprising an attachment support member (4) configured to connect the ventilation device (2), the spray boom (3) and the recovery panel (1), said attachment support member (4) comprising at least a base (5), a connector (6), a support member (7) and at least a pair of actuators (8), the base (5) being fastened to the top (110) of said recovery panel (1), the connector (6) and the support member (7) being configured to be connected to the ventilation device (2), to the spray boom (3) and to the base (5), said actuators (8) being movable between a retracted position and a deployed position along a longitudinal axis, said support member (7) being connected to the base (5) by means of said actuators (8), said actuators (8) each having a first end (81) and a second end (82), **characterized in that** said actuators (8) are arranged on either side of a first plane of symmetry extending in the vertical direction (Z) of said panel (1), said first end (81) of each actuator (8) being connected to the base (5) and said second end (82) of each actuator (8) being connected to the support member (7), the connector (6) being configured to be connected by means of a pivot connection (9;10) to said base (5) or to said spray boom (3), the actuator (8) being configured, when a force is applied to said panel (1), to move between a rest position and the deployed and/or retracted position so as to allow said panel (1) to be tilted with respect to said vertical direction (Z), and, when said force is no longer applied to said panel (1), to return to the rest position so that said panel (1) extends mainly in said vertical direction (Z).

2. Recovery panel (1) according to the preceding claim, **characterized in that** the connector (6) comprises a first pivot connection (9) and a second pivot connection (10), said connector (6) being connected to said base (5) by means of said first pivot connection (9) and being configured to be connected to said spray boom (3) by means of said second pivot connection (10), the axis of rotation of the first pivot connection (9) and the axis of rotation of the second pivot connection (10) intersecting.

3. Recovery panel (1) according to either of the preceding claims, **characterized in that** the actuator (8) is connected to the base (5) via a support part (11), said support part (11) being connected to the base (5) by a pivot-type connection and to the first end (81) of the actuator (8) by another pivot-type connection, so that said support part (11) makes it possible to increase the travel of the actuator (8) between its rest position and its deployed position.

4. Recovery panel (1) according to the preceding claim, **characterized in that** said attachment support member (4) comprises two pairs of actuators (8), said pairs being arranged on either side of a second plane of symmetry in the vertical direction (Z) of said panel (1), said first end (81) of each actuator (8) being connected to the base (5) and said second end (82) of each actuator (8) being connected to the support member (7).

5. Recovery panel (1) according to the preceding claim, **characterized in that** the longitudinal axis of each actuator (8) is inclined with respect to any of the planes of symmetry in the vertical direction (Z) of said panel (1), said longitudinal axes being substantially concurrent at a point belonging to one of said planes of symmetry in the vertical direction (Z).

6. Recovery panel (1) according to claim 1, the connector (6) being configured to be connected by means of a pivot connection (9) to said base (5), **characterized in that** the base (5) is configured to abut against the connector (6) upon tilting of said panel (1) with respect to said vertical direction (Z), about the axis of rotation of the pivot connection (9) connecting the connector (6) to the base (5).

7. Recovery panel (1) according to claim 1, the connector (6) being configured to be connected by means of a pivot connection (10) to said spray boom (3), **characterized in that** the connector (6) is configured to abut against the support member (7) upon tilting of said panel (1) with respect to said vertical direction (Z), about the axis of rotation of the pivot connection (10) configured to connect the connector (6) to the spray boom (3).

8. Recovery panel (1) according to any of the preceding claims, comprising an end-of-travel sensor which is associated with each actuator (8) and is configured to detect when an actuator (8) reaches the deployed position.

9. Agricultural spraying system for agricultural machinery, comprising at least one recovery panel (1) according to any of the preceding claims, a ventilation device (2) and a spray boom (3), the attachment support member (4) of said panel (1) connecting the ventilation device (2), the spray boom (3) and said recovery panel (1), the connector (6) being connected by means of a pivot connection (9; 10) to the base (5) and/or to said spray boom (3).

10. Agricultural machinery comprising an agricultural spraying system according to the preceding claim.
